# EUROPEAN PATENT APPLICATION

(11) **EP 3 760 893 A1**
(43) Date of publication of application: **06.01.2021**
(21) Application number: 19305907.8
(22) Date of filing: 03.07.2019
(51) Int. Cl.: F16F 9/32, F16F 9/10

(54) **SYSTEM FOR MONITORING A DAMPING DEVICE**

(71) Applicant: Soletanche Freyssinet, 92500 Rueil-Malmaison (FR)
(72) Inventor: CYNOBER, Charles, 92130 Issy les Moulineaux (FR); DOMANGE, Antoine, 75016 (FR); GROULT, Antonin, 78140 Vaux sur Seine (FR); TOTH, Miklos, 93260 Les Lilas (FR)
(74) Representative: Nony

(57) **Abstract**

The present invention relates to a system (20) for monitoring fluid pressure of a viscous fluid damping device (10), comprising at least one strain sensor (21) present on a wall (11) of the damping device, the strain sensor being responsive to a deformation of the wall dependent on the fluid pressure.

## Description

The present invention relates to the monitoring of damping devices which utilize a viscous fluid as the working medium to create damping forces, also called viscous fluid dampers.

US5347771 discloses a passive damping device for reducing vibrations of a building structure in response to seismic vibrations or the like, in which a cylinder member and a piston rod member are connected to respective structural elements of the building structure that may move one relative to the other. A plurality of passages through the piston connect fluid chambers on opposite sides of the piston. Energy is dissipated through head loss in these passages.

US6108987 relates to a viscous fluid damping device for a civil engineering structure such as a bridge.

JP0559840A discloses another example of seismic viscous fluid damping device.

In case of low ambient temperature, the fluid tends to contract more than the cylinder member, which may result in the apparition of gas bubbles in the fluid, which is detrimental to correct operation of the device. For this reason at least, the fluid is maintained at an initial pressure above a predefined limit to compensate for the pressure drop resulting from diminution of the ambient temperature.

The maintenance of a viscous fluid damping device thus requires that the fluid pressure be monitored on a regular basis, to check for the absence of leakage or excessively high or low pressure.

The damping device may be provided with an apparent manometer for this purpose. However, in some situations, the manometer is exposed to a risk of vandalism.

To obviate this issue, the internal pressure may be monitored using an instrument for temporary reading the pressure, that is connected to the damping device during the time of measurement. The operation requires at each reading the build-up of a fluid column, which leads to a loss of fluid and a corresponding loss of pressure. Furthermore, the connection and disconnection of the instrument increases the risk of leakage.

There thus remains a need for a solution for reliably monitoring the pressure of the viscous fluid while reducing the risk of vandalism and leakage, and without causing a loss of fluid at each measurement.

The invention aims at overcoming at least some of the drawbacks of the prior art and exemplary embodiments of the invention are directed to a system for monitoring fluid pressure of a viscous fluid damping device, comprising at least one strain sensor present on a wall of the damping device, the strain sensor being responsive to a deformation of the wall dependent on the fluid pressure.

The strain sensor may be fixed to the wall, for example by being glued thereon, or may comprise at least one strain gauge directly printed or applied in any other way on the wall, or etched on the wall.

Thanks to the invention, the pressure of the fluid may be read without the need for a fluidic connection to the damping device. Accordingly, any risk of leakage resulting from the measurement is avoided. Furthermore, the measurement is not accompanied by any loss of fluid.

A further advantage of the invention is to make it easier to hide the system and thus lower the risk of vandalism.

There exist strain sensors that are relatively thin and thus can be easily covered by a coating that helps hide them. The system may thus be covered at least partially or entirely by a coating, such as a paint coat for example.

The strain sensor may be a RF strain sensor that changes resonant frequency as it is deformed. The sensor's resonant frequency can be determined by monitoring the signals transmitted and/or reflected therefrom upon illumination of the sensor by a known RF signal source. In such situation, the system may not need any communication device fixed on the damping device to transmit data from the sensor to an external reader. However, it is preferable to use a communication device to which the strain sensor is connected. This allows to use a large variety of strain sensors and data may be transmitted in digital format to an external receiver, which may extend the range.

The strain sensor may comprise a foil strain gauge comprising an insulating flexible substrate which supports a conductive pattern, for example a zig-zag pattern of parallel lines. When the substrate is stretched, the pattern deforms and an electrical parameter of the pattern changes, such as its electrical resistance for example.

The invention is not limited to any particular kind of strain sensor and the latter may be a piezo resistor strain gauge, a semiconductor strain gauge, a nanoparticle-based strain gauge, resonant strain gauge, a capacitive strain gauge, a MEMS or MOEMS strain gauge, a vibrating stain gauge, such as a surface acoustic wave strain gauge, inter alia.

Preferably, the strain sensor is of low thickness. The strain sensor, the communication device and the cable connecting them preferably has a thickness less than a paint layer covering the damping device so that they are invisible to the unskilled, thus limiting the risk of vandalism.

Preferably, the strain sensor is fixed on a wall chamber and is oriented on the wall chamber so as to measure elongation in the circumferential direction.

The strain sensor may incorporate any processing circuit to deliver information regarding measured stress in digital form and/or with temperature compensation.

When the strain sensor is connected to a communication device, the latter may provide electrical power to the strain sensor, if needed.

The information representative of measured stress may be transmitted by the strain sensor to the communication device as an analogous signal, for example a value of electrical conductance.

In variant embodiments, this information is pre-processed by the strain sensor and is transmitted by the strain sensor to the communication device as a digital signal.

Preferably, the strain sensor is connected to the communication device by a wired connection. In a variant, the strain sensor is connected to the communication device by a wireless connection, for example a RF or optical connection.

The strain sensor and the communication device may appear as two distinct modules; in a variant, the strain sensor and the communication device appear as a single module. For example, the strain sensor comprises a substrate that bears both a strain gauge and an electronic circuit that serves as a communication device.

The system preferably comprises a temperature sensor. This enables temperature compensation of the strain measurement. The temperature sensor is preferably positioned so that the temperature it reads is the temperature of the wall chamber and/or the temperature of the fluid. The temperature sensor may be carried by the strain sensor or the communication device or may be an additional component such as a wired temperature probe.

Information related to both temperature and elongation may be transmitted by the communication device to an external reader for example. Overpressure corresponding to a temperature variation is known for the fluid and the device used. The correlation between pressure and temperature thus depends on the type of device and the type of fluid. By comparing the measured pressure for a given temperature to reference data, the existence of a leak may be detected.

The system, and more particularly the communication device and/or the strain sensor, may be deprived of any internal energy source.

In such situation, they may be powered by an external reader when the latter is brought close to the communication device.

Energy may be transmitted by the external reader to the communication device and/or strain sensor by inductive coupling, as is common in RFID technology.

The external reader may comprise for this purpose an inductive antenna to transmit power to the communication device and receive data.

The external reader may operate at 125 kHz, 134 kHz or 13,56 MHz or any other frequency dedicated to RFID communication.

The communication device may comprise an antenna for both receiving energy for powering the system and for exchanging information with the external reader.

The antenna used by the communication device for receiving energy and transmitting data may be the same one; in a variant, the communication device may comprise one antenna for receiving energy and a different one for communicating data.

When an operator wants to read information from the system, he or she may approach the external reader close enough to the communication device. To help positioning the external reader, a marking may be present on the fluid damping device. Such a visual marking is for example a pictogram or other mark that is printed over a layer of paint hiding the communication device.

The external reader may also be part of a IoT private or public network for receiving data from objects, such as LoRaWAN (Long Range Wide-Area Network) networks for example. It may be a UNB network such as SIGFOX. In such case, the communication device transmits on a periodical basis information about the measurements carried out. This information may be transmitted via the IoT network and internet to a terminal such as a mobile phone, computer or any remote server such as a cloud server or other dedicated server or equipment.

The system, preferably the communication device, may also have an internal energy storage source such as a battery or supercapacitor for powering it between measurements and/or during measurements and data transmission. This internal energy storage source may be recharged by the external reader when the latter is approached for reading the measurements. It may also be recharged otherwise, for example by a generator that generates electrical energy based on energy generated by the viscous fluid. The communication device may thus comprise a power generator for generating energy from a displacement of at least one part of the damping device. Other power generators such as a solar panel or wind turbine may be used. The presence of an internal energy storage may increase the power for data transmission and the range of communication.

The invention further relates to a method for monitoring fluid pressure of a viscous fluid damping device, comprising receiving data representative of strain measured by the strain sensor of the system of the invention as defined above.

Said receiving may be made in response to interrogation of the communication device with an external reader.

The communication between the external reader and the communication device is preferably a wireless communication. Thus, there will be no connection to be made on site between the strain sensor and the external reader, which reduces the risk of connection error and damage to the outlets.

The system may be installed prior to pressurizing the fluid. This may help to submit the strain sensor to some initial deformation for increased accuracy and measurement range.

Data related to temperature is advantageously transmitted by the communication device. Data related to temperature of the chamber may thus be received in addition to data representative of strain.

The behavior of the fluid and of the device with temperature is known and enables to compute the expected pressure variation due to a temperature change. By comparison with the pressure measured, one may determine if there exists a loss of pressure due to a leak for example.

The data may be sent to an external reader providing energy to the monitoring system, as mentioned above.

Exemplary embodiments of the invention also relate to a method for providing a viscous fluid damping device with a system for monitoring the fluid pressure, as defined above, wherein the strain sensor is installed on said device, preferably on a wall chamber of the device, prior to pressurizing the fluid inside the device.

Preferably, the strain sensor is covered by at least one hiding layer, such as a layer of paint. The system may be hidden from view and thus less vulnerable to vandalism. The thickness of the system may be less than 1 mm, better less than 0,2 mm.

The method may comprise forming a positioning mark on said layer for assisting an operator in positioning an external reader relative to the system for receiving data therefrom. This mark may be located over the communication device.

A further aspect of the invention relates to a system for monitoring a deformation of a structure, comprising a strain sensor to be fixed to the structure and a communication device to which the strain sensor is connected, for transmitting data relating to the strain measured by the strain sensor. The system is preferably of low thickness, so as to be easily hidden below a coating of paint or any other hiding layer. The thickness may be less than 15 mm. Such a system may exhibit all or some of the features recited above of the system for monitoring the fluid pressure. In particular, the system may comprise a temperature sensor so that the communication device transmits both information related to the strain measured by the strain sensor and temperature of the structure. This may enable to measure the strain component that is not induced by the temperature variation.

The system may comprise a strain sensor with a RFID chip of low thickness, for example less than or equal to 1mm, and some other electronic components of higher thickness, for example up to 15mm, all of them being encapsulated in a same protective and hiding coating.

The various aspects of the invention will be more fully understood when the following specification is read in conjunction with the accompanying drawings, wherein:
FIG.1 is a diagrammatic view, in longitudinal cross section, of an example of damping device equipped with a monitor system made in accordance with the invention,
FIG.2 is a cross section of the cylinder of the damping device of figure 1,
FIG.3 is a diagrammatic view illustrating exchange of data between the monitoring system and an external reader, and
FIG. 4 is a diagrammatic and partial view of a monitoring system hidden by a coating.

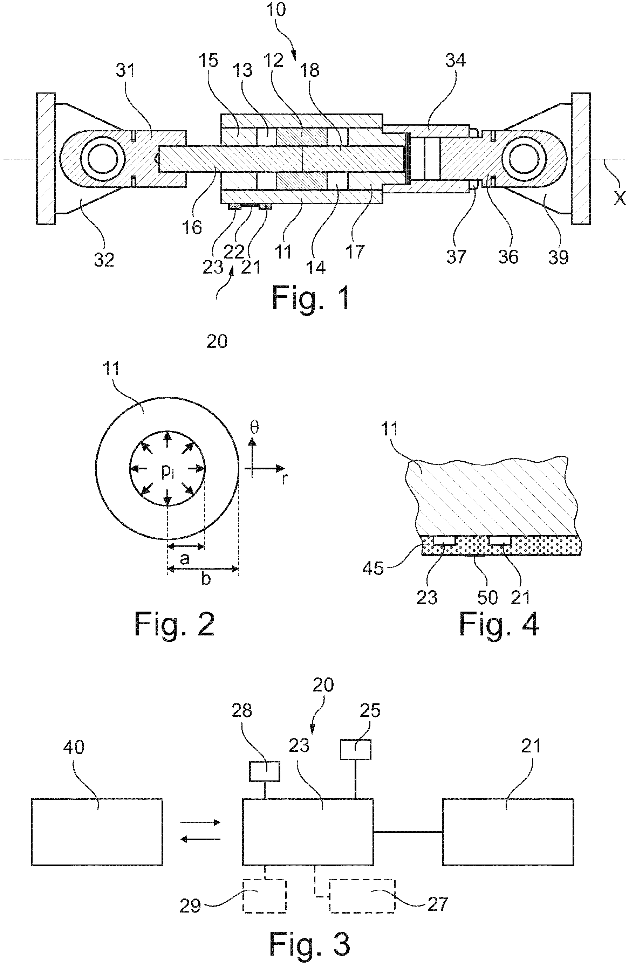

FIG. 1 shows a damping device 10 equipped with a monitoring system 20 made in accordance with the invention.

The damping device 10 comprises a cylinder 11 extending along a longitudinal axis X and in which a plunger 12 may slide along the axis X.

The plunger 12 defines first and second chambers 13 and 14 inside the cylinder 11.

The chamber 13 is closed at one end of the cylinder 11 by a front guide 15 in which a front rod 16 may slide along the axis X.

Similarly, the chamber 14 is closed at the other end of the cylinder by a rear guide 17 in which a rear rod 18 along the axis X.

The internal ends of the rods 16 and 18 are assembled by the plunger 12.

The external end of the rod 16 is fixed to a front coupling 31 which is pivotably connected to a front clevis 32.

The rear guide 17 is fixed to one end of a tubular spacer 34, the other end of which is fixed into a rear coupling 36.

The spacer 34 may be internally threaded and the rear coupling 36 may be screwed into the spacer 34 until the desired distance is reached between the front and rear couplings.

A blocking nut 37 may be screwed onto the rear coupling 36 to block the latter in position.

The rear coupling 36 is pivotably connected to a rear clevis 39. The pivotal movement between the front coupling 31 and the front clevis 32 may take place around a rotation axis that is parallel to the one around which the rear coupling 36 pivots relative to the rear clevis 39.

The front clevis and the rear clevis are connected to structural elements of a building or other civil engineering structure to be protected against seismic vibrations, in a manner known per se.

The chambers 13 and 14 are filled with a viscous fluid, which may be an oil.

Fluid passages are provided to allow a flow of fluid to circulate from one chamber to another in response to a displacement of the front clevis relative to the rear clevis.

These passages may be provided in the plunger 12, and are not illustrated as damping devices with such passages are known per se.

The pressure of the fluid when the damping device is at rest is high enough to compensate for a loss of pressure due to a drop of ambient temperature within the operating range.

According to the invention, the monitoring system 20 allows to monitor this internal pressure.

The monitoring system 20 comprises a strain sensor 21 and a communicating device 23 to which the strain sensor 21 is connected by a cable 22 or any other wired link.

The strain sensor 21 may comprise any kind of gauge that is responsive to an elongation or deflection of the support to which it is fixed.

In the described embodiment, the strain sensor 21 is fixed on a cylindrical wall of the cylinder 11. The pressure value inside the chamber is correlated with the strain on the outside by an established relationship, that is for example determined experimentally and/or by means of a finite element model.

The relation between the internal pressure of the cylinder 11 and the radial stress or and orthoradial stress σ_{θ} may be approximated by σr = (a²pi/(b²⁻a²))(1-b²/r²) et σ_{θ} = (a²pᵢ/(b²-a²))(1+b²/r²) where pᵢ stands for internal pressure, *a* for the internal half diameter of the cylinder, *b* for the external half diameter of the cylinder 11, and r is the considered radius within the range [a;b] as shown in figure 2. In some circumstances, the strain ε_{θ} may be related to the stress σ_{θ} by a linear relation σ_{θ} = E.ε_{θ}

The monitoring system 20 preferably comprises a temperature sensor 25 that is connected to the communication device 23, as shown in figure 3.

The temperature sensor 25 may be an external component to the strain sensor 21 and communication device 23 or in a variant may be integrated to one of them.

Knowledge of the temperature allows to compute a temperature compensation for better measurement accuracy.

The energy for operation of the monitoring system may be brought to it in various manners.

In one embodiment, the monitoring system 20 is powered only when a reader 40 is approached to the system 20, as shown in figure 4.

The system 20 may comprise a winding 28 and the reader 40 may be configured to provide energy by inductive coupling with the winding 28.

The monitoring system 20 may in a variant comprise a generator 29 for transforming a displacement of the damping device into energy for powering the system 20. The latter may also comprise an internal power source 27 such as a battery or capacitor. This power source may be rechargeable and recharged when a reading takes place, by energy supplied by the reader 40.

The monitoring system 20 is preferably made with a small thickness so that it can be easily hidden under a non-conductive protective coating 45, as shown in Figure 4.

This coating 45 may be a paint that is applied over a large surface of the damping device 10, so that the entire system 20 is substantially hidden from view below such paint layer.

In such a situation, it may be desirable to print a visual mark 50 over the paint 45 to help an operator to localize the system 20.

The system 20 may operate as follows.

When the operator approaches the external reader 40, the antenna of the reader 40 inductively couples with the one of the communication device and the latter is powered on. A measurement of the strain may be performed by the strain sensor and corresponding data transmitted to the reader 40, together with an information about the temperature of the wall of the cylinder 11, for example.

This data may be processed by the reader 40 to compute the pressure of the fluid and/or an indicator of a loss of fluid and the pressure and/or any relevant information may be displayed on the reader and/or and recorded therein, for example on a SD card or other kind of electronic memory.

In order to control a possible pressure measurement drift over time, pressure monitoring as a function of the ambient temperature is preferably performed.

The overpressure corresponding to a temperature variation is known for the fluid used. If the measured pressure value is not consistent with an abacus connecting it to ambient temperature, the reader 40 may emit a visual and/or audio corresponding warning signal and an inspection of the device may be performed to check for leakage.

Or course, the invention is not limited to this described embodiment. For example, more than one strain sensor may be positioned on the damping device.

## Claims

1. A system (20) for monitoring fluid pressure of a viscous fluid damping device (10), comprising at least one strain sensor (21) present on a wall (11) of the damping device, the strain sensor being responsive to a deformation of the wall dependent on the fluid pressure.

2. The system of claim 1, comprising a wireless communication device (23), the strain sensor (21) being connected to the communication device.

3. The system of claim 2, comprising a temperature sensor (25) so that information related to both temperature and elongation is transmitted by the communication device.

4. The system of any one of claims 2 and 3, the communication device (23) comprising an inductive winding (28) for receiving energy from an external reader (40).

5. The system of any one of claims 1 to 4, comprising a power generator (29) for generating energy from a displacement of at least one part of the damping device.

6. The system of any one of claims 1 to 5, being covered at least partially by a coating (45).

7. The system of claim 6, being entirely covered by a paint coat (45).

8. The system of any one of claims 1 to 7, with dependency to claim 2, comprising a visual mark (50) for positioning an external reader (40) so that it can communicate with the communication device (23).

9. A method for monitoring fluid pressure of a viscous fluid damping device, comprising receiving data representative of strain measured by the strain sensor of a system as defined in any one of claims 1 to 8.

10. The method of claim 9, the system comprising a communication device (23) as claimed in claim 2, wherein said receiving is made in response to an interrogation of the communication device (23) with an external reader (40).

11. The method of one of claims 9 and 10, data related to temperature of device being received in addition to data representative of strain.

12. The method of any one of claims 9 to 11, the data being sent to an external reader (40) providing energy to power the monitoring system (20).

13. A method for providing a viscous fluid damping device (10) with a system (20) for monitoring the fluid pressure, as defined in any one of claims 1 to 8, wherein the strain sensor (21) is installed on said device prior to pressurizing the fluid inside the device.

14. The method of claim 13, wherein the strain sensor (21) is covered by at least one hiding layer, preferably a layer of paint (45).

15. The method of claim 14, comprising forming a positioning mark (50) on the hiding layer (45), for assisting an operator in positioning an external reader (40) relative to the system for receiving data therefrom.
